# EUROPÄISCHE PATENTSCHRIFT

(11) **EP 1 613 517 B1**
(45) Veröffentlichungstag und Bekanntmachung des Hinweises auf die Patenterteilung: **20.12.2006**
(21) Anmeldenummer: 04702690.1
(22) Anmeldetag: 16.01.2004
(51) Int. Cl.: B60T 7/10

(54) **FESTSTELLBREMSE MIT EINER SEILZUGVORRICHTUNG**
PARKING BRAKE COMPRISING A CABLE TRACTION DEVICE
FREIN DE STATIONNEMENT POURVU D'UN DISPOSITIF A CABLES

(30) Priorität: 16.04.2003 DE 10317585
(43) Veröffentlichungstag der Anmeldung: 11.01.2006
(73) Patentinhaber: SIEMENS AKTIENGESELLSCHAFT, 80333 München (DE)
(72) Erfinder: BAIER-WELT, Christian, 64372 Ober-Ramstadt (DE); MÜLLER, Karlheinz, 97076 Würzburg (DE)
(86) Internationale Anmeldenummer: PCT/EP2004/000320
(87) Internationale Veröffentlichungsnummer: WO 2004/091986

(56) Entgegenhaltungen:
- EP-A- 0 754 610
- WO-A-03/008248
- DE-C- 19 818 339
- FR-A- 2 761 654

## Beschreibung

Die Erfindung betrifft eine Feststellbremse, insbesondere für ein Kraftfahrzeug.

Bei Feststellbremsen, die auch als Parkbremsen bezeichnet werden, wird eine Betätigungskraft durch einen Seilzug auf eine Radbremse übertragen. In der Praxis wird dies dadurch erreicht, dass zwei Bremsseile, die auch als Bowdenzüge bezeichnet werden, parallel oder in entgegengesetzter Richtung gestrafft werden. Um eine ungleichmäßige Bremswirkung der gebremsten Räder zu vermeiden, ist es dabei erforderlich, dass die Kraft des rechten und des linken Seils durch eine geeignete mechanische Verbindung im Wesentlichen gleich ist. Die Bedingung der Kraftgleichheit muss auch dann erfüllt sein, wenn sowohl die rechte als auch die linke Seite der Bremsanlage bei gleicher Kraft unterschiedliche Zugwege am Seilende erfordern. Dies kann beispielsweise durch unterschiedliche Seillängen zur rechten und linken Radbremse bedingt sein. Hierdurch entstehen unterschiedliche Ersatzsteifigkeiten zwischen den einzelnen Seilen.

Aus dem Stand der Technik sind im Fahrzeuginnenraum angeordnete Handbremshebel bekannt, die eine Seilwaage als Element zum Kraftausgleich verwenden. Eine solche Feststellbremse ist beispielsweise aus der Patentschrift DE 101 03 295 C1 bekannt. Mit einer solchen Lösung können die Bremsseile jedoch nur in einer Richtung angezogen werden, weshalb für eine Straffung der Seile in entgegengesetzter Richtung eine nachfolgende Seilumlenkung erforderlich ist. Dies hat zum einen einen erhöhten Platzbedarf zur Folge. Zum anderen sinkt durch die erforderliche Seilumlenkung der Wirkungsgrad des Seilsystems.

Ein weiterer Lösungsansatz besteht in der Verwendung eines Spindelsystems zur Straffung der Bremsseile in entgegengesetzter Richtung. Dabei ist ein Seil an der Spindel selbst angebracht, während das andere Seil mit der Spindelmutter als Gegenstück verbunden ist. Spindel und Spindelmutter sind dabei schwimmend gelagert, um eine Kraftgleichheit zu gewährleisten. Andere Lösungen verwenden eine schwimmend gelagerte gegenläufige Spindel mit einem Rechts- und einem Linksgewinde im Sinne eines Seilspannschlosses. Nachteilig bei diesen Systemen sind neben den höheren Kosten einer Spindel gegenüber anderen Getriebeelementen das feste Übersetzungsverhältnis und die hohe Reibung eines spindelbasierten mechanischen Systems.

Bei einem weiteren Lösungsansatz, wie zum Beispiel aus dem nächstliegenden Dokument zum Stand der Technik, der WO 03/008248 bekannt, wird eine geschlitzte Scheibe verwendet, durch deren Schlitz der Innenzug der Bremsseile durchgeführt wird. Eine Drehung dieser Scheibe, beispielsweise durch eine Getriebeabtriebswelle, führt zu einer Verkürzung und damit zu einer Straffung des Bowdeninnenzugs. Die aus Festigkeitsgründen sehr großen Biegeradien der Bremsseile in der Schlitzführung der drehbaren Scheibe erfordern jedoch einen großen Abstand der gezogenen Seile. In der Folge entstehen sehr hohe Drehmomente auf der antreibenden Welle. Hierdurch wird ein sehr hoch übersetzendes Getriebe mit einer groß dimensionierten Abtriebswelle notwendig. Ein weiterer Nachteil dieser Lösung ist die unzureichende Balance zwischen dem rechten und dem linken Seilzug, da die relativ hohe Gleitreibung der Schlitzführung stark unterschiedliche Seilkräfte zu beiden Seiten ermöglicht.

Auch der Einsatz eines Dreharmes mit zwei darauf gegenüberliegend angeordneten Rollen und einem gegenläufig durch die Rollen laufenden Bremsseil beseitigt nicht die Problematik des vergleichsweise hohen erforderlichen Drehmoments und der damit einhergehenden Baugröße der Antriebseinrichtung.

Aufgabe der vorliegenden Erfindung ist es, eine konstruktiv einfach aufgebaute Feststellbremse mit geringem Platzbedarf zu schaffen, welche in der Lage ist, zwei Bremsseile mit im Wesentlichen gleicher Kraft in entgegengesetzter Richtung zu straffen. Diese Aufgabe wird durch eine Feststellbremse mit den Merkmalen des Patentanspruchs 1 gelöst.

Die Erfindung basiert auf dem Grundgedanken, mit Hilfe eines konstruktiv einfachen Aufbaus unter Verwendung von mindestens zwei Umlenkrollen eine Straffung der Bremsseile zu erreichen, in dem die Verbindungslinie zwischen wenigstens zwei der Umlenkrollen gegenüber der Hauptachse des Antriebs verdreht wird. Dazu sind die Bremsseile an jeweils einem Ende zu einem durchgehenden Bremsseil verbunden. Dieses Bremsseil wird im Sinne einer gegenläufigen Umlenkung, vorzugsweise um 180°, um die Umlenkrollen geführt, von denen zumindest eine beweglich gelagert ist. Auf diese Weise wird eine Platz sparende Mechanik zur Verfügung gestellt. Durch das Verdrehen der Verbindungslinie zwischen den Drehachsen mindestens zweier Umlenkrollen erfolgt eine relative Verschiebung der Rollen zueinander, wodurch dem Bremsseil ein Umweg aufgeprägt wird, welcher zu einer Straffung des Bremsseils führt.

Die Verdrehung der Verbindungslinie zwischen den Drehachsen der Umlenkrollen wird durch die besondere Anordnung der Umlenkrollen gewährleistet. Dabei ist eine Umlenkrolle ortsfest angeordnet, während die zweite Umlenkrolle rotatorisch bewegbar ist.

Für eine rotatorische Bewegung der Umlenkrolle ist diese vorzugsweise an einem Schwenkarm angeordnet. Dieser Schwenkarm ist als Schwenkhebel ausgebildet und wird mit Hilfe einer Abtriebswelle verschwenkt. Zu diesem Zweck ist der Schwenkarm vorzugsweise starr mit der Abtriebswelle verbunden. Die Abtriebswelle wird von einem Elektromotor, angetrieben, so dass sich hierdurch eine elektromotorische Feststellbremse ergibt.

Besonders vorteilhaft dabei ist, dass lediglich ein einziger Antrieb erforderlich ist. Der wesentlich aufwändigere Einsatz mehrerer Motoren oder einer getrennten Kraftregelung über diese Motoren, wie im Stand der Technik beispielsweise bei Spindel-Lösungen erforderlich, entfällt.

Über eine geeignete Anordnung der beiden Umlenkrollen zueinander wird erfindungsgemäß eine Minimierung des Antriebsmoments im Sinne eines Momentenausgleichs erreicht. Der Momentenausgleich kann dabei teilweise oder aber vollständig im Sinne einer im angezogenen Zustand momentenfreien Abtriebswelle erfolgen.

Durch die geringe Teileanzahl ist die erfindungsgemäße Feststellbremse äußerst robust und wenig fehleranfällig. Die Ausgestaltung der Erfindung im Sinne einer Minimierung des Antriebsmoments ermöglicht durch die geringere erforderliche Übersetzung die Einsparung von Getriebestufen und zudem den Einsatz kleinerer Getriebewellen. Dadurch sinkt der Bauraumbedarf des Getriebes, so dass beispielsweise in einem Kraftfahrzeug eine mittige Anordnung im Bereich der Hinterachse möglich ist.

Zudem kann die nicht lineare Übersetzung der vorgestellten Lösung mit Momentenausgleich vorteilhaft genutzt werden, um bei ansteigenden Seilkräften während die Bremse geschlossen wird ein im wesentlichen gleichbleibendes Motormoment zu gewährleisten. Dadurch wird eine bessere, gleichmäßigere Nutzung des Leistungspotentials des Motors erreicht, was zu einem geringeren Strombedarf für die verwendeten Elektromotoren führt. Zugleich können die Stellzeiten verkürzt werden.

Durch Verwendung von um sich selbst drehbar gelagerten Umlenkrollen wird die Reibung für einen Kraft- bzw. Wegausgleich der beiden Bremsseile minimiert. Durch einen gleitreibungsfreien und damit qualitativ hochwertigen Seilkraftausgleich entfällt die beim Stand der Technik erforderliche externe, mit Gleitreibungsverlusten behaftete Seilumlenkung, wie sie bei Systemen mit Seilwaage notwendig ist. Im Vergleich zu herkömmlichen Systemen weist daher die erfindungsgemäße Feststellbremse einen wesentlich höheren Wirkungsgrad auf. Ein Ausgleich des geringen Wirkungsgrades des Seilsystems durch eine erhöhte Leistungs- bzw. Kraftabgabe des Antriebes, wie aus dem Stand der Technik bekannt, ist nicht erforderlich.

Darüber hinaus kann bei der erfindungsgemäßen Lösung mit einer variablen Übersetzung des Getriebes gearbeitet werden, wodurch eine besonders flexible Anpassung an die verschiedenen Einsatzbedingungen möglich wird.

Durch die geometrische Anordnung mit Momentenausgleich erfolgt eine Minimierung der Getriebebelastung, was zugleich zu einer Erhöhung der Lebensdauer der Feststellbremse führt.

Die erfindungsgemäße Feststellbremse mit gleitreibungsfreiem Seilkraftausgleich kann in allen Arten von Kraftfahrzeugen und darüber hinaus, beispielsweise in der Antriebs- und Fördertechnik oder aber in Schienenfahrzeugen eingesetzt werden.

Die vorliegende Erfindung wird nachfolgend anhand von Ausführungsbeispielen beschrieben, die mit Hilfe von Zeichnungen näher erläutert werden, in denen funktionsgleiche Bauteile durchgehend mit gleichen Bezugszeichen bezeichnet sind. Hierbei zeigen:
- Figur 1: eine perspektivische Darstellung einer Ausführungsform einer Feststellbremse aus dem Stand der Technik,
- Figur 2: eine schematische Darstellung einer Ausführungsform der erfindungsgemäßen Feststellbremse im gelösten Zustand,
- Figur 3: die Feststellbremse aus Figur 2 im teilweise angezogenen Zustand,
- Figur 4: eine schematische Darstellung einer Seilrollenmechanik mit vollständigem Momentenausgleich.

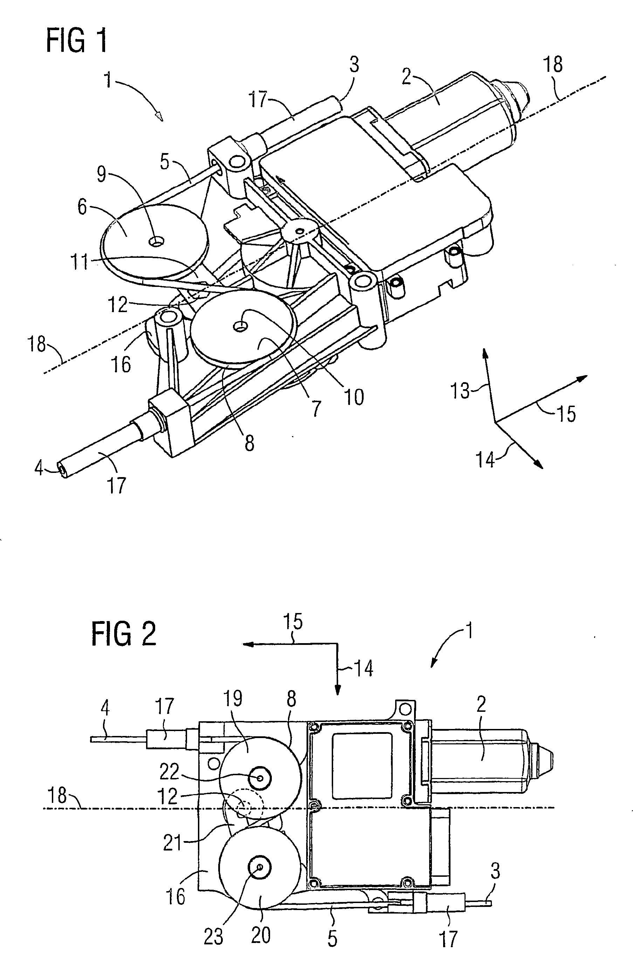

In Figur 1 ist eine Feststellbremse 1 oder Parkbremse gemäß dem Stand der Technik wie auch aus dem Dokument WO 03/008248 bekannt, abgebildet. Die Feststellbremse 1 umfasst einen Elektromotor 2 und eine damit verbundene Mechanik zur Straffung zweier als Bowdenzüge ausgeführten Bremsseile 3, 4 in entgegengesetzter Richtung. Die Innenzüge der beiden Bowdenzüge sind zu einem durchgehenden Innenzug 5 verbunden. Der Innenzug 5 ist dabei im Sinne einer gegenläufigen Seilumlenkung um zwei Umlenkrollen 6, 7 geführt. Die Umlenkrollen 6, 7 oder Seilrollen sind dabei als Seilscheiben ausgebildet, wobei der Innenzug 5 in einer umlaufenden Seitenrille 8 geführt wird. Anstelle der Seilscheiben können für die Umlenkung des Seilzuges auch entsprechend ausgebildete Kreissegmente verwendet werden.

Die beiden Umlenkrollen 6, 7 sind an ihren Mittelpunkten drehbar an einem Schwenkarm 11 angebracht. Jede der beiden Umlenkrollen 6, 7 ist dabei an einem Freiende des Schwenkhebels 11 angeordnet, während der Schwenkhebel 11 selbst an einer von dem Elektromotor 2 angetriebenen Getriebeabtriebswelle 12 angebracht ist. Die Drehachsen 9, 10 verlaufen parallel zur Längsachse der Getriebeabtriebswelle 12. Der Drehpunkt des Schwenkarmes 11, also seine Befestigung mit der Getriebeabtriebswelle 12, ist in etwa mittig zwischen den Drehachsen 9, 10 der Umlenkrollen 6, 7 angeordnet, welche durch die Mittelpunkte der Umlenkrollen 6, 7 verlaufen.

Der Schwenkarm 11 ist in einer Schwenkebene verschwenkbar, die senkrecht zur in z-Richtung 13 verlaufenden Längsachse der Getriebeabtriebswelle 12 liegt. Da auch die beiden Umlenkrollen 6, 7 in der durch die Quer- und Längsrichtung 14, 15 des Antriebsgehäuses 16 definierten Schwenkebene liegen, ist eine äußerst kompakte Bauform des Gehäuses 16 möglich.

In dem Gehäuse 16, dessen Oberteil in Figur 1 der Übersichtlichkeit halber nicht abgebildet ist, sind die Getriebeabtriebswelle 12, der Schwenkarm 11 und die Umlenkrollen 6, 7 ebenso wie der Innenzug 5 angeordnet. Außerhalb des Gehäuses 16 laufen die beiden Bremsseile 3, 4 als Bowdenzüge in entsprechend vorgesehenen Schutzhülsen 17, welche am Gehäuse 16 befestigt sind.

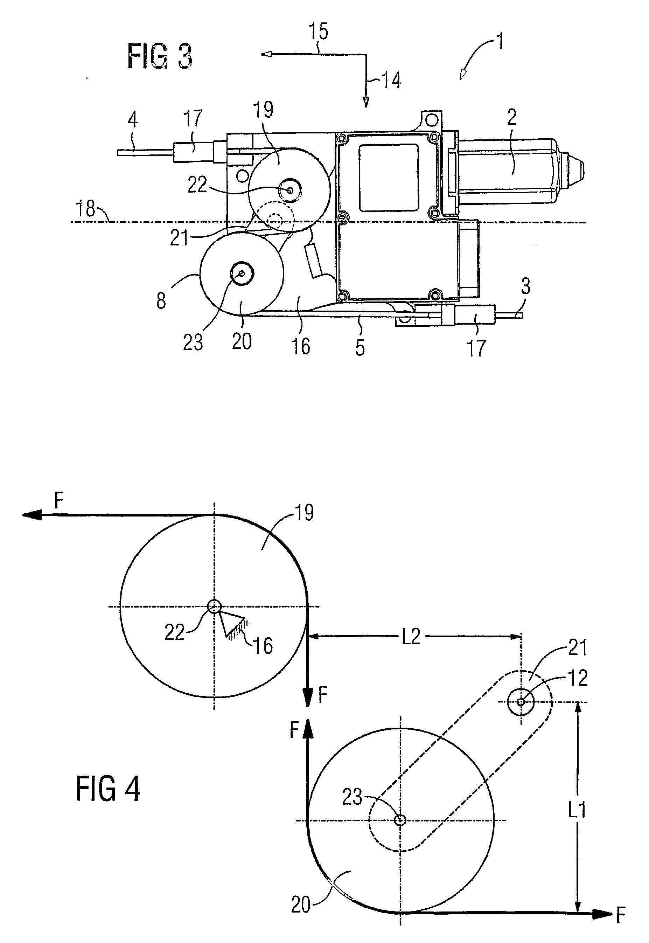

Figur 2 zeigt eine Ausführungsform der Erfindung, bei der ein besonders geringes Drehmoment auf die Getriebeabtriebswelle 12 erreicht wird. Hierbei ist die eine Umlenkrolle 19 ortsfest am Gehäuse 16 angebracht. Die andere Umlenkrolle 20 ist wiederum endseitig auf einem Schwenkhebel 21 befestigt. Der Schwenkarm 21 ist an seinem gegenüberliegenden Freiende mit der Getriebeabtriebswelle 12 verbunden, die von dem Elektromotor 2 angetrieben wird. Um die beiden um Drehachsen 22, 23 drehbar gelagerten Umlenkrollen 19, 20 wird der Innenzug 5 der Bremsseile 3, 4 im Sinne einer gegenläufigen Seilumlenkung herumgeführt. Erfolgt nun eine Betätigung der Feststellbremse 1 in Anzugsrichtung, so führt eine Verschwenkung des Schwenkarmes 21 zu einem Übergang vom gelösten in den angezogenen Zustand, wie es in Figur 3 abgebildet ist. Hierzu schwenkt der Hebelarm 21 die auf ihm sitzende Umlenkrolle 20 derart relativ zu der ortsfesten Umlenkrolle 19, dass es zu der erforderlichen Straffung des Innenzuges 5 kommt.

Eine Betätigung der Feststellbremse 1, also ein Einschalten des Elektromotors 2, führt zu einer Rotation der Abtriebswelle 12 und damit zu einem Verschwenken des Hebelarmes 21. Hierdurch wird die Verbindungslinie zwischen den Drehachsen der Umlenkrollen 19, 20 gegenüber der parallel zu den Bremsseilen 3, 4, durch den Mittelpunkt der Getriebeabtriebswelle 12 verlaufenden Antriebshauptachse 18 verdreht. Bei Antriebsdrehrichtung des Elektromotors 2 in Anzugsrichtung der Feststellbremse führt dies zu einer Straffung des Innenzuges 5. Dadurch wird die Rotation der Getriebeabtriebswelle 12 in eine translatorische Seilbewegung umgeformt.

Bei den vorgenannten Ausführungen wird durch Betätigung der Feststellbremse 1 entgegen der Anzugsrichtung der Innenzug 5 gelockert und die Feststellbremse kann sich lösen.

Für einen vollständigen Momentenausgleich wird eine Anordnung der Seilrollenmechanik verwendet, wie sie schematisch in Figur 4 dargestellt ist. Das Moment an der Getriebeabtriebswelle 12 ist gleich Null, wenn die Bedingung L1 = L2 erfüllt ist. Dies kann durch eine geeignete Anordnung der Umlenkrollen 19, 20 sowie des Schwenkarmes 21 erreicht werden.

## Patentansprüche

1. Feststellbremse (1), insbesondere für ein Kraftfahrzeug, mit einem Elektromotor, einer Seilzugvorrichtung zur Bremsbetätigung und einer gegenläufigen Seilumlenkung mittels wenigstens zweier Umlenkrollen (19, 20) für zwei im Wesentlichen in entgegengesetzter Richtung wirkende, durchgehend miteinander verbundene Bremsseile, welche Umlenkrollen derart angeordnet sind, dass die Verbindungslinie zwischen den Drehachsen (22,23) wenigstens zweier Umlenkrollen (6, 7, 19, 20) gegenüber der Antriebshauptachse (18) verdrehbar ist,
**gekennzeichnet durch** eine ortsfeste Umlenkrolle (19) und eine rotatorisch bewegbare Umlenkrolle (20), wobei die rotatorisch bewegbare Umlenkrolle (20) an einem Schwenkarm (21) angeordnet ist, der mittels einer von dem Elektromotor (2) angetriebenen Abtriebswelle (12) verschwenkbar ist und wobei die Umlenkrollen (19, 20) und der Drehpunkt des Schwenkarmes (21) im Sinne einer Reduzierung des resultierenden Drehmoments auf die Abtriebswelle (12) so angeordnet sind, dass sich, im angezogenen Zustand der Feststellbremse, die **durch** die Zugkräfte (F) der Bremsseile (3, 4) ausgeübten Momente um den Drehpunkt des Schwenkarmes gegenseitig, zumindest teilweise oder aber vollständig ausgleichen.

## Claims

1. Parking brake (1), in particular for a motor vehicle, having an electromotor, a cable traction device for brake operation and a contra-rotating cable deflection by means of at least two guide pulleys (19, 20) for two brake cables which act in essentially opposite directions and are continuously connected to each other, said guide pulleys being arranged in such a way that the connecting line between the axes of rotation (22, 23) of at least two guide pulleys (6, 7, 19, 20) can be swivelled in relation to the drive main axis (18), **characterised by** a guide pulley (19) which is static and a guide pulley (20) which can be moved in a rotary manner, wherein the guide pulley (20) which can be moved in a rotary manner is arranged on a swinging arm (21) which can be swung by means of a driven output shaft (12) which is driven by the electromotor (2) and wherein, in the sense of a reduction of the resulting torque on the output shaft (12), the guide pulleys (19, 20) and the pivot of the swinging arm (21) are arranged in such a way that in the tightened state of the parking brake the torques that are exercised about the pivot of the swinging arm, as a result of the tractive forces (F) of the brake cables (3, 4), are reciprocally balanced at least partially or even fully.

## Revendications

1. Frein de stationnement (1), en particulier pour un véhicule automobile, avec un moteur électrique, un dispositif à câbles pour l'actionnement du frein et un dispositif de renvoi des câbles en sens opposés au moyen d'au moins deux galets de renvoi (19, 20) pour deux câbles de frein reliés de manière traversante entre eux et agissant sensiblement en sens opposés, ces galets de renvoi étant disposés de telle sorte que la ligne de jonction entre les axes de rotation (22, 23) d'au moins deux galets de renvoi (6, 7, 19, 20) peut être désaxée par rapport à l'axe d'entraînement principal (18), **caractérisé par** un galet de renvoi fixe (19) et en galet de renvoi mobile en rotation (20), le galet de renvoi mobile en rotation (20) étant monté sur un bras pivotant (21) qui peut pivoter au moyen d'un arbre de sortie (12) entraîné par un moteur électrique (2), et les galets de renvoi (19, 20) et l'axe de rotation du bras pivotant (21) étant disposés, pour réduire le couple de torsion résultant sur l'arbre de sortie (12), de telle sorte qu'à l'état serré du frein de stationnement, les couples exercés en sens opposés par les forces de traction (F) des câbles de frein (3, 4) autour du centre de rotation du bras pivotant s'équilibrent au moins partiellement, ou aussi entièrement.
